# EUROPEAN PATENT SPECIFICATION

(11) **EP 3 822 458 B1**
(45) Date of publication and mention of the grant of the patent: **04.01.2023**
(21) Application number: 19209597.4
(22) Date of filing: 15.11.2019
(51) Int. Cl.: F01D 11/00, F01D 9/02, F01D 9/04, F02C 7/28, F16J 15/08

(54) **GAS TURBINE FOR POWER PLANT AND METHOD FOR RETROFITTING A GAS TURBINE FOR POWER PLANT ALREADY IN SERVICE**
KRAFTWERKSGASTURBINE UND VERFAHREN ZUM NACHRÜSTEN EINER BEREITS IN BETRIEB BEFINDLICHEN KRAFTWERKSGASTURBINE
TURBINE À GAZ POUR CENTRALE ÉNERGÉTIQUE ET PROCÉDÉ DE RÉÉQUIPEMENT D'UNE TURBINE À GAZ POUR CENTRALE ÉNERGÉTIQUE DÉJÀ EN SERVICE

(43) Date of publication of application: 19.05.2021
(73) Proprietor: Ansaldo Energia Switzerland AG, 5400 Baden (CH)
(72) Inventor: MARLOW, Paul, 5400 BADEN (CH); FLEURIOT, Fabien, 5400 BADEN (CH)
(74) Representative: Martini, Gabriele

(56) References cited:
- EP-A1- 0 161 203
- EP-A1- 3 269 937
- WO-A1-2014/018963
- US-A- 4 379 560

## Description

### Field of the Invention

The present invention relates to the technical field of the gas turbines for power plants and the methods for retrofitting gas turbines for power plants already in service.

### Background

As known, in a gas turbine assembly (or only gas turbine) an incoming air flow is compressed and after ignited in a combustor with an added fuel to produce a hot gas flow to be expanded in a turbine for generating a rotating work on a rotor in turn connected to a generator. Due to the very high temperature of the working hot gas, some components of a gas turbine assembly have to be cooled and therefore beside of the main hot gas flow also a cooling flow (usually cooling air) is circulating inside the gas turbine. Moreover, some components of a gas turbine are configured to allow some relative movements depending on the working condition. In view of the above, inside the field of the gas turbine assemblies for power plants the present invention in detail refers to the technical problem of how to seal a gas turbine interface for separating the cooling air flow from the hot gas flow wherein this sealing has to be guaranteed during all operating or working conditions.

### Description of prior art

As known, a gas turbine assembly for power plants comprises a compressor assembly, a combustor assembly and a turbine assembly. The compressor assembly is configured for compressing incoming air supplied at a compressor inlet. The compressed air leaving the compressor assembly flows into a volume (called "plenum") and from there into the combustor assembly. This combustor assembly comprises usually a plurality of burners configured for injecting fuel (at least one type of fuel) into the compressed air flow. The mixture of fuel and compressed air enters a combustion chamber where this mixture ignites. The resulting hot gas flow leaves the combustion chamber and by passing in the turbine assembly performs a rotating work on the rotor connected to a generator. As known, the turbine assembly comprises a plurality of stages, or rows, of rotating blades that are interposed by a plurality of stages, or rows, of stator vanes. The rotating blades are supported by the rotor whereas the stator vanes are supported by a casing (called "vane carrier") that is concentric and surrounding the turbine assembly.

In order to achieve a high efficiency, the hot gas flow has to have a very high turbine inlet temperature. However, in general this high temperature involves an undesired high NOx emission level. In order to reduce this emission and to increase operational flexibility without decreasing the efficiency, a so called "sequential" gas turbine is particularly suitable. In general, a sequential gas turbine comprises a first and a second combustor or combustion stages wherein each combustor is provided with a plurality of burners in a combustion chamber. Today at least two different kinds of sequential gas turbines are known. According to a first embodiment, the first and the second combustor are annular shaped and are physically separated by a stage of turbine blades, called high pressure turbine. Downstream the second combustor a second turbine unit is present (called low pressure turbine). This kind of gas turbine is produced by the Applicant and is available on the market as "GT26". According to a second embodiment of a sequential gas turbine, the gas turbine is not provided with the high-pressure turbine and the combustor assembly is realized in form of a plurality of can-combustors. Each can-combustor comprises a first combustor and a second combustor arranged directly one downstream the other inside a common can shaped casing. Also, this second kind of a sequential gas turbine is produced by the Applicant and is available on the market as "GT36". These two examples of gas turbine assemblies (GT26 and GT36) have been cited only as non-limiting examples wherein the present invention (i.e. an improved membrane seal as will be described in the following) can be applied during service or can be incorporated from the beginning.

In almost all kind of gas turbine assemblies, seals are used for sealing the interface between stationary and moving components and/or for separating the hot gas flow from the cooling air flow. In particular, the sealing of the circumferential interface between the combustor outlet and the first vane row of the turbine is today a challenge because this sealing has to be guaranteed during all operating conditions. Indeed, in this interface the vane usually has to be cooled (the temperature of the hot gas leaving the combustor is very high) and moreover the vane can move in both the axial and radial directions.

According to a first prior art example, the sealing arrangement of the combustor to turbine interface comprises a honeycomb seal arrangement. In this example, each first vane comprises an inner platform. The word "inner" means near to the turbine axis in contrast with the outer end of the vane connected to the outer supporting casing surrounding the turbine. This platform comprises of labyrinth teeth acting against a honeycomb seal fixed to the combustor end (i.e. to the end of a combustor liner segment carrier). The above honeycomb sealing arrangement involves some drawbacks. In particular, a full seal loss during operation may occurs or a simply partial seal delamination can lead to high leakages in this interface.

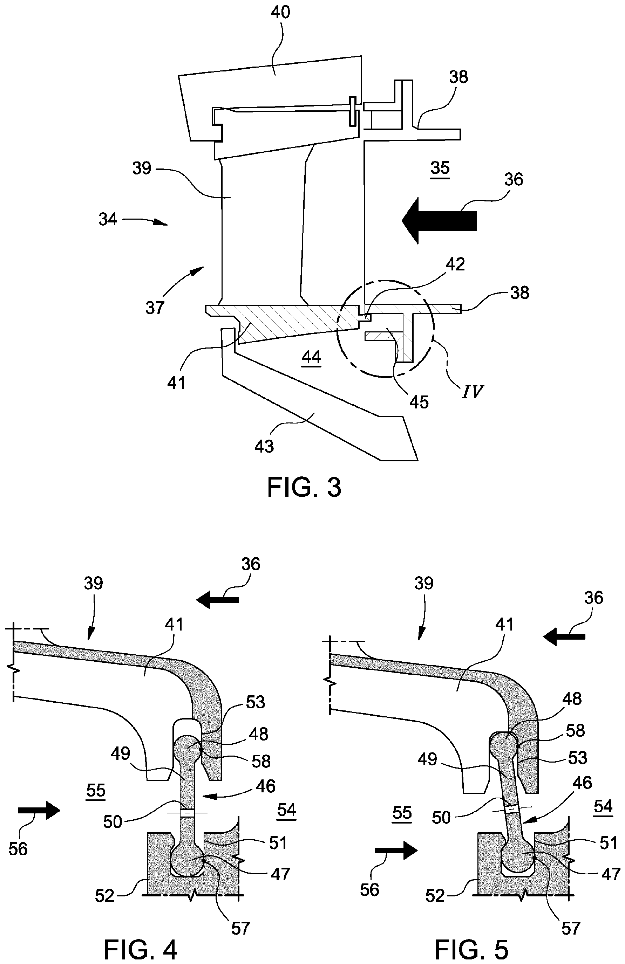

According to a second prior art example, the sealing arrangement of the combustor to turbine interface comprises a membrane seal arrangement extending radially from the end of the combustor liner segment carrier to the vane platform. In particular, this membrane seal is called "dog-bone" seal because it comprises a membrane connecting an inner spherical end housed in a seat or groove in the combustor liner segment carrier and an outer spherical end housed in a seat or groove in the vane inner platform. This solution allows relative vane movements, particularly in the axial direction. However, by using a standard dog-bone membrane seal (as it will be clear during the description of figure 4 and 5) in some cases the vane platform contacts the membrane. This contact reduces the pressure loading and unloads the inner and outer circumferential sealing lines between the spherical ends and the grooves. Moreover, in this condition the seal can vibrate resulting in increased wear and the risk of seal damage.

Although the above problem of sealing has been described in relation to the combustor to turbine interface, the same problem affects other locations inside a gas turbine, where there is the need to separate the cooling air flow from the hot gas flow and where some parts move with respect to the others depending on the operating conditions.

EP3269937 discloses a gas turbine unit comprising a combustor having a liner, a turbine, arranged downstream of the liner along a main flow gas direction and including a plurality of first stage vanes, a rotor cover support located inwardly of the vanes, and a sealing arrangement at the combustor to turbine interface. According to EP3269937 the sealing arrangement comprises a dogbone seal.

### Disclosure of the invention

Accordingly, a primary object of the present invention is to provide a gas turbine suitable for overcoming the above problems of the prior art. In particular, the primary object of the present invention is to provide a gas turbine having an improved membrane seal arrangement suitable for accommodating larger vane displacements with no reduction in lifetime. The invention is a gas turbine according to claim 1.

The skilled person in the field of gas turbines for power plants will know that a gas turbine is an assembly comprising:
- a compressor intaking air and configured for compressing this air;
- a combustor assembly configured for injecting fuel in the compressed air and for burning this mixture in order to create a hot gas flow.

The words "at least one turbine" mean that a gas turbine according the present invention may comprise a single-stage turbine or a high-pressure turbine followed by a low-pressure turbine. Also, the combustor assembly may comprise a single-stage combustor or two sequential stages of combustion. In this last case, these two stages of combustion may be divided by a turbine stage (the above high-pressure turbine) or may be connected directly in series in a common can-shaped casing (a so called can-combustor gas turbine).

The membrane seal arrangement of the present invention may be placed in many different locations inside the gas turbine. In particular a critical location is the combustor to turbine interface, i.e. the interface comprising the upstream end of the combustor casing or liner segment carrier and the downstream first row of vanes. As known, at this interface there is the main hot gas flow, which flows from upstream to downstream into the vane airfoils and a cooling air flow (for instance compressed air) flowing in a channel or volume below (radially inwards) the vane platform with a seal. The volume on the downstream side of the seal is fed with cooling air and is called "the higher-pressure air volume" whereas the volume on the upstream side the seal is called "the lower-pressure volume". As common in the field of gas turbines, the words "upstream" and "downstream" refer to the hot gas flow direction. The words "inwards/inner" and "outwards/outer" refer the radial position relative to the axis of the gas turbine. Also, the words "axially", "radially" and "circumferentially" refer to the axis of the gas turbine.

The foregoing cited cooling air flowing below (radially inwards) the vane platform is necessary for cooling the vane and it is important to avoid leakage of this cooling air into the hot gas flowing above (radially outwards) the vane platform. In view of the above, the closest prior art for the present invention relates to a membrane seal arrangement called "dog-bone" seal. This known membrane seal comprises:
- an inner spherical end housed in a groove in a carrier (the combustor liner segment carrier or the rotor cover casing);
- an outer spherical end housed in a groove in the vane inner platform;
- a membrane connecting inner and outer spherical ends. In a standard "dog-bone" seal the membrane may be defined as "in line" with respect to the spherical ends, i.e. the membrane is straight along a line connecting the centers of the spherical ends.

Starting from this prior art, the present invention provides an improved membrane seal arrangement (or simply a membrane seal) comprising:
- a not necessarily spherical inner end, housed in a groove in the carrier (the combustor liner segment carrier or a rotor cover casing);
- a not necessarily spherical outer end housed in a groove in the vane inner platform;
- a membrane connecting the inner and outer ends wherein this membrane of the present invention is not aligned to a line connecting the centers of the ends but is offset with respect to the outer end towards the higher-pressure volume (i.e. the volume on the downstream side of the seal and fed by the cooling air). The word "offset" means that the outer end of the membrane is not connected to a middle portion of the outer end but on the downstream side creating a "P" shaped outer end. The membrane is also offset with respect to the inner end towards the lower-pressure volume on the opposite side of the seal.

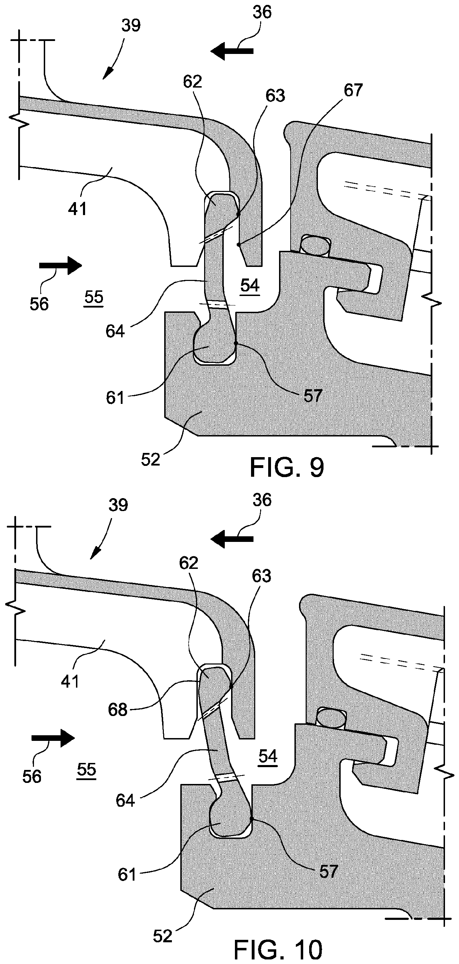

In view of the above, according the invention there is more clearance between the upstream side of the vane groove and the membrane (offset downstream). This clearance may be further increased by making the linear membrane with a kink so that angle of the membrane at the outer end is steeper than that at the inner end, or by making the membrane completely nonlinear. The resulting larger clearance allows the vane to perform a larger axially displacements in operation without contact between the vane platform and seal membrane (see the example in figure 10).

According to an embodiment, the membrane of the present invention has through holes positioned close to the outer end and configured for feeding cooling air onto the seal contact surface in the vane platform groove.

Alternatively or in combination with the above holes, the membrane may be provided with a through holes positioned close to the inner end to cool the seal contact surface in the carrier groove and feed the cooling air as purge air into a lower-pressure volume on the upstream side of the membrane seal.

Preferably, the outer end is not spherical and has a larger radial depth towards the downstream side to reduce contact stress and rate of material loss, when the vane platform wears into the outer end to create a continuous circumferential sealing contact line, which minimizes cooling air leakage. The outer edges are chamfered to provide at least the same assembly lead-in capability as a spherical end.

Preferably, the outer end has a smaller radial depth towards the upstream side to form a sacrificial wear surface. A vane row consists of separate vanes. Between individual vane platforms there is always an axial mismatch caused by production and assembly tolerances. The thermal movements of individual vanes differ in operation increasing the mismatch between individual vane platforms. The sacrificial surface is shaped to allow the mismatched vane platforms to quickly and easily wear into the outer end of the membrane seal and form a continuous circumferential sealing line on the lower-pressure side to minimize cooling air leakage.

Preferably, the upstream side of the inner and outer ends of the membrane seal have a wear coating applied to minimize wear and increase the lifetime of the seal. Preferably the upstream side of vane groove also has a wear coating applied to minimize wear and increase the lifetime of the vane. Preferably the upstream side of carrier groove also has a wear coating applied to minimize wear and increase the lifetime of the carrier.

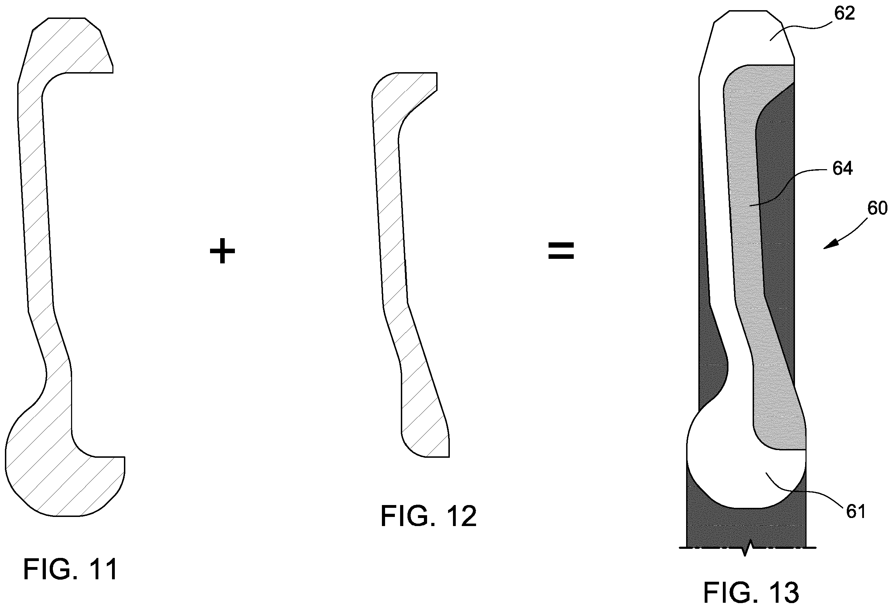

Large gas turbines have upper-part and lower-part casings which are bolted together at the split-line. Therefore, the membrane seals cannot be continuous circular rings. The membrane seal arrangement of the present invention also comprises an upper part and a lower part with overlapping ends to minimize leakage. These overlapping ends require a sectional shape different to that of basic seal sectional shape previously described. In particular, the sectional shape of these ends are configured so that when overlapping the same sectional shape as the rest of the membrane seals results (see the example in figures 11-13).

Preferably, at least one membrane seal arrangement of the present invention is arranged at the combustor to turbine interface.

The present invention is a method for retrofitting gas turbines for power plants already in service according to claim 12. The former standard "dog-bone" membrane seal is replaced with a new membrane seal according to the present invention, i.e. an "offset" membrane seal.

It is to be understood that both the foregoing general description and the following detailed description are exemplary and are intended to provide further explanation of the invention as claimed. Other advantages and features of the invention will be apparent from the following description, drawings and claims.

The features of the invention believed to be novel are set forth with particularity in the appended claims.

### Brief description of drawings

Further benefits and advantages of the present invention will become apparent after a careful reading of the detailed description with appropriate reference to the accompanying drawings.

The invention itself, however, may be best understood by reference to the following detailed description of the invention, which describes an exemplary embodiment of the invention, taken in conjunction with the accompanying drawings, in which:
- figures 1 and 2 are schematic views of two gas turbine assemblies wherein the sealing according the present invention can be applied;
- figures 3-5 are schematic views of two different examples of prior art solutions referring to the problem of sealing the combustor to turbine interface;
- figure 6 discloses an embodiment of the present invention assembled in a gas turbine;
- figures 7-8 discloses two embodiments of a membrane seal according to the present invention;
- figures 9-10 discloses different working conditions of a gas turbine comprising a membrane seal according to the present invention;
- figures 11-13 discloses two overlapping ends of a membrane seal according to the present invention.

### Detailed description of preferred embodiments of the invention

In cooperation with the attached drawings, the technical contents and detailed description of the present invention are described thereinafter according to preferred embodiments, being not used to limit its executing scope. Any equivalent variation and modification made according to appended claims is all covered by the claims claimed by the present invention.

Reference will now be made to the drawing figures to describe the present invention in detail.

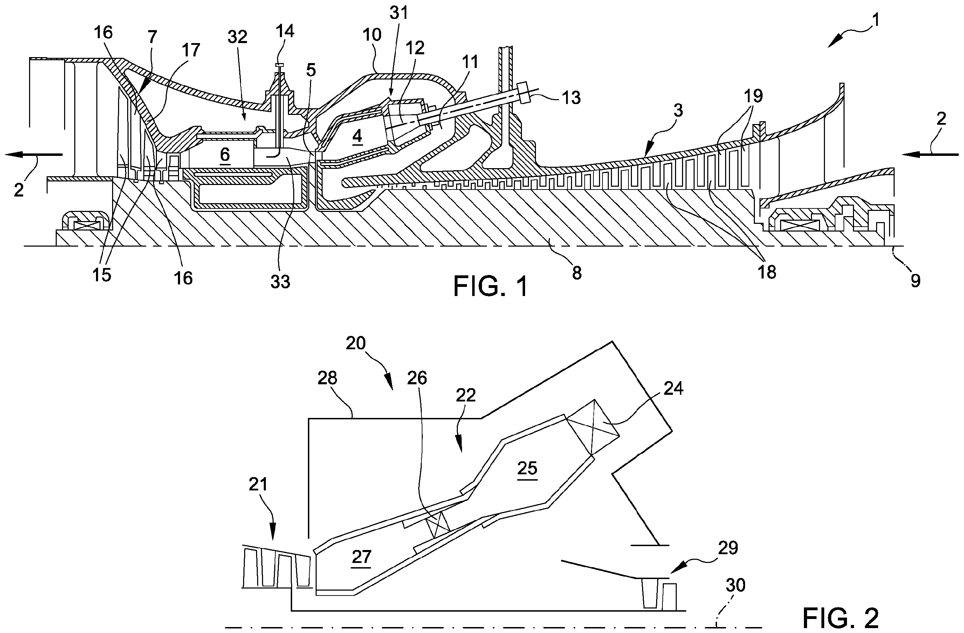

Reference is now made to Fig. 1 that is a schematic view of a first non-limiting example of a gas turbine assembly (or only gas turbine) for power plant 1 that can be provided with the new membrane seal according to the present invention. According to the embodiment of figure 1 this gas turbine comprises is a so called "sequential-combustion gas turbine" provided with a high-pressure and a low-pressure turbine. Following the main gas flow 2, the gas turbine 1 of figure 1 comprises a compressor 3, a first combustor 31, a high-pressure turbine 5, a second combustor 32 and a low-pressure turbine 7. The compressor 3 and the two turbines 5, 7 are part of or are connected to a common rotor 8 rotating about an axis 9 and surrounded by a concentric casing 10. The compressor 3 is supplied with air and has rotating blades 18 and stator vanes 19 configured to compress the air entering the compressor 3. Exiting the compressor, the compressed air flows into a plenum 11 and from there into numerous first burners 12 of the first combustor 31 arranged in a circular pattern around the axis 9. Each first burner 12 is configured for injecting at least one type of fuel (connected to at least one first fuel supply 13) into the compressed airflow. Preferably, this first burner 12 may be defined as a "premix" burner because is configured for mixing the compressed air and the injected fuel before the ignition. The fuel/compressed air mixture flows into a first combustion chamber 4 annularly shaped, where this mixture ignites. During start-up this mixture is initially ignited by an ignitor, for instance by a spark igniter; once ignited the ignition is self-sustaining and the ignitor is turned off. The resulting hot gas leaves the first combustor chamber 4 and is partially expanded in the high-pressure turbine 5 performing work on the rotor 8. Downstream of the high-pressure turbine 5 the partially-expanded hot gas flows into a row of second burners 33 where at least one type of fuel is injected by fuel lances 14 (each burner has one lance). The partially-expanded gas has a high temperature and contains sufficient oxygen for further combustion that occurs by self-ignition in the second combustion chamber 6 arranged downstream of the row second burners 33. These second burners 33 are also called "reheat" burners. The reheated hot gas leaves the second combustion chamber 6 and flows in the low-pressure turbine 7 where it is expanded performing work on the rotor 8. The low-pressure turbine 7 comprises numerous stages: rows of rotor blades 15 arranged in series in the main flow direction. Such rows of blades 15 are interposed by rows of stator vanes 16. The rotor blades 15 are connected to the rotor 8 whereas the stator vanes 16 are connected to a vane carrier 17 that is a concentric casing surrounding the low-pressure turbine 7. Although not visible in figure 1, this gas turbine 1 has numerous seals, in particular many membrane seals arranged, for instance, at the interface of the second combustor to first turbine vane. In view of the above, a gas turbine as disclosed in figure 1 may be provided with the new membrane seal of the present invention.

Reference is now made to Fig. 2 that is a schematic view of a second not-limiting example of a gas turbine that can be provided with the new membrane seal according to the present invention. This gas turbine 20 is also a "sequential-combustion gas turbine" that can be provided with the innovative features according to the present invention. In particular, figure 2 shows a partial view of a gas turbine 20 with a compressor 29, a turbine 21 and a sequential combustor 22. The sequential combustor 22 of figure 2 has numerous so-called can combustors, i.e. numerous bolt-on casings wherein there are numerous of first burners 24, for instance four first burners 24, a first combustion chamber 25, numerous second burners 26, and a second combustion chamber 27. Upstream of the second burner 26 an mixer may be provided for adding air into the hot gas leaving the first combustion chamber 25 and creating turbulence in the air/hot gas mixture. The sequential combustor arrangement is at least in part housed in an outer casing 28 supporting the individual can combustors 22 arranged in a circular pattern around the turbine axis 23. At least one type of fuel is introduced via a first fuel injector (not shown) into the first burners 24 wherein the fuel is mixed with the compressed air supplied by the compressor 29. Also each of the first burners 24 of this embodiment is a "premix" burner configured for generating a premixed flame. When the hot gas leaves the second combustion chamber 27 it then expands in the turbine 21 performing work on a rotor 30. Although not visible in figure 2, this gas turbine 20 comprises numerous seals, including membrane seals, which could be arranged for instance at the can combustors to first turbine vane interface. In view of the above, a gas turbine as disclosed in figure 2 may be provided with the new membrane seal of the present invention.

Reference is made to Figure 3 which is a schematic view of a combustor to first vane turbine interface of a gas turbine unit according the prior art. This gas turbine 34 comprises at least one combustor schematically represented with reference 35 producing a hot gas flow 36. In particular, figure 3 shows a combustor 36 to turbine 37 interface. This interface is defined by:
- a combustor liner 38,
- a first row of vanes 39, which are outwardly supported by a casing 40 and inwardly comprises a vane platform 41 with a labyrinth tooth 42 on the side adjacent to the combustor inner liner 38,

- a rotor cover 43 located between the rotor (not shown) and the vane 39 with a cooling-air passage 44 (i.e. a compressed air feed), and
- a honeycomb seal 45 attached to the liner 38 and together with the vane labyrinth tooth 42 seals the cooling air from the hot gas flow 36.

As described in the prior art chapter, this prior art practice has drawbacks, particularly the limited capacity to accommodate operational movement of the vane 39, the prior art practice solution is shown as assembled in figures 4 and as in operation in figure 5. In figures 4-5 the sealing arrangement comprises a standard "dog-bone" membrane seal 46. This "dog-bone" membrane seal 46 has an upper and lower part which overlap near the gas turbine casing split-line and, as shown, has an inner spherical end 47, an outer spherical end 48 and a straight central membrane 49 (provided with a purge air hole 50) connecting the two spherical ends. The inner spherical end 47 is housed in a circumferential recess 51 in a carrier 52. This carrier 52 may be part of a combustor liner or of a rotor cover. The seal outer spherical end 48 is housed in a circumferential recess 53 in the vane inner platform 41. As previously discussed, the two spherical ends require a continuous circumferential contact line with the vane platforms and carrier at positions 57 and 58 to minimize cooling-air leakage into the main flow hot gas. Additionally, the membrane 49 has holes 50 (radially positioned near the center of the membrane) to feed cooling air 56 to purge hot gas out of the cavity 59 between the vane platform and liner segments. This "dog-bone" membrane seal 46 separates the hot gas flow 36 from the cooling air 56. Defining upstream and downstream with respect to the main hot gas flow direction 36, volume 54 upstream of the seal 46 is the lower-pressure side whereas the downstream volume 55 (fed with cooling air) is the higher-pressure side. Figure 4 shows the assembled position. In operation the vane platform 39 has a large radially inwards and axially downstream movement relative to the seal end 48; figure 5 shows that upstream face 53 of the groove in vane platform 39 contacts the membrane in the steady-state operating position. The pressure drop over the "dog-bone" seal 49 creates a high force at the contact point 59 shown in figure 5. This contact 59 limits the capability of the "dog-bone" to accommodate operational movements of the vane 39 relative to the carrier 52. The seal pressure loading is transferred to the contact point 59, which reduces the lifetime of the "dog-bone" seal because inner and outer sealing contact lines 58 57 unload allowing the "dog-bone" membrane to vibrate. This vibration increases the wear and creates the risk of seal breakup in operation. Using a standard symmetrical "dog-bone" membrane seal, as shown in figure 5, the capacity to accommodate larger displacements of the vane 39 relative to the carrier 52 can only be achieved by increasing the radial height of the membrane. However, increasing the radial height of the membrane seal is usually not possible due to the design requirements of a gas turbine.

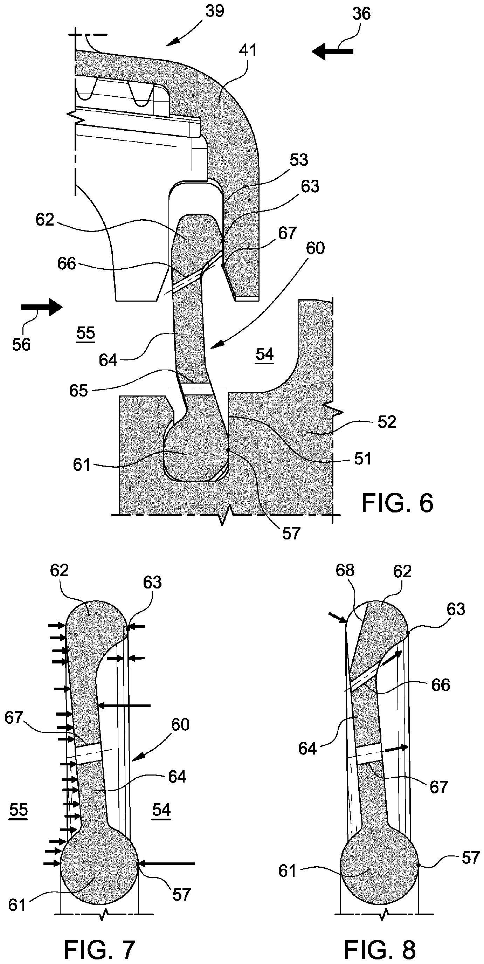

As disclosed in the summary of the invention chapter, the present invention offers a solution for overcoming the above drawbacks and allowing a larger vane relative movements in the downstream direction (i.e. downstream with respect to the main hot gas flow direction). According the general definition of the invention, the new solution proposed is to provide a membrane seal with ends in grooves vane platforms and in a carrier and the ends are connected by a membrane that is offset towards the higher-pressure side (i.e. downstream side of the seal). Figure 6 shows an embodiment according this invention wherein the elements also shown in figure 4 and 5 have been labelled with the same reference numbers. Since the invention refers also to servicing method of replacing the "dog-seal" seal, all adjacent parts are the are the same as shown in figures 4 and 5. As shown in figure 6, this example of the improved membrane seal 60 comprises an inner end 61 configured to create a continuous circumferential sealing line of contact 57 on the upstream surface of the carrier groove 51. The new membrane seal 60 comprises an outer end 62 configured to create a continuous circumferential sealing line of contact 63 on the upstream surface of the vane platform grooves 53. The membrane 64 is offset towards the higher-pressure side 55, i.e. is connected to the outer end 62 not in the central position but close to the downstream higher-pressure side of the outer end 62. The outer portion of the seal therefore has a "P"-shaped profile. As a consequence of this particular profile shape, there is a larger clearance between the upstream surface of the vane grooves (reference 67 in figure 6) and the membrane 64 so that larger axial movements of the vanes can be accommodated without contact between the membrane 64 and the upstream surface of the vane grooves 67. Without membrane seal contact the loading of continuous circumferential inner and outer sealing lines of contact is sufficiently high to seal effectively without vibration and a with longer life of the seal. In the embodiment of figure 6 the membrane 64 is also not centrally connected to inner end 61; the membrane is offset towards the lower-pressure side of the seal at the inner end 61 so that the seal can accommodate larger vane relative movements without contact of the membrane to the carrier. According to this configuration the complete sectional profile of seal 60 may be defined as substantially "S" shaped. The seal in figure 6 also shows two rows of through holes 66 65 in the membrane 64 position close to the seal ends 61 62. The cooling air passing through the inner row of holes 65 cools the seal inner end and the groove contact surface, as well as performing its main function of purging hot gas out the cavity between the vane platforms and the liner segments; the cooling air passing through the outer row of holes 66 cools the seal outer end and the groove contact surfaces, before exiting into the cavity purge hot gas. The outer row of holes 66 are inclined to directing the cooling air onto the groove surface 53 close to the line of contact 63.

Figure 7 discloses another embodiment of a seal invention according to the invention, i.e. a seal having membrane offset towards the higher-pressure side of the seal at the outer end. In this example, the inner end 61 is circular and the membrane 64 is centrally connected to the inner end 61. In this embodiment the membrane 64 is has a single row of through holes 67 feeding cooling air into the cavity to purge hot gas; the seal outer end 62 at the sealing line of contact 63 has a reduced radial depth and is a sacrificial wear surface.

Figure 8 shows another embodiment of the seal invention. In this example, the seal is very similar to the seal in figure 7. However, the seal of figure 8 comprises two rows of holes as shown in figure 6 and the outer end 62 has a circumferential pattern of slots 68 on the higher-pressure side to reduce hoop stress resulting from the asymmetry of the end profile.

Figure 9 and 10 show two different operating conditions of the seal in figure 6. Particularly, figure 9 shows the position of the components after assembly (as figure 6), whereas figure 10 shows the position of the components in steady-state operating condition (the vane platform displaces radially inwards and axially downstream relative to the carrier). As shown in figure 10, the seal of the present invention can accommodate larger vane movements relative to the carrier because the membrane is offset. In the operating position of figure 10 there is no contact of the vane platform nor the carrier to the membrane connecting the two ends of the seal.

The seal of the present invention has an upper and lower part, which overlap close to the gas turbine casing split-line so that the entire circumference of the combustor to vane interface is sealed. The seal sectional profile of the seal upper and lower part at the overlap is such that when the seal is assembled the sectional profile at the overlapped position a seal is the same as at seal sectional section at all other circumferential positions. Figures 11 and 12 show ends of the upper and lower part that when overlapping as shown in figure 13 have the same sectional profile as the rest of the seal.

Although the invention has been explained in relation to its preferred embodiment(s) as mentioned above, it is to be understood that many other possible modifications and variations can be made without departing from the scope of the claims.

It is, therefore, contemplated that the appended claim or claims will cover such modifications and variations that fall within the true scope of the invention as defined by the appended claims.

## Claims

1. A gas turbine for power plant; the gas turbine (1, 20) comprising:
- at least a turbine (5, 7, 21, 34) provided with at least a row of stator vanes (16, 39) configured for guiding an hot gas flow (36); each vane (16, 39) being outwardly connected to an outer casing (17, 40) and comprising an inner platform (41);
- a liner segment carrier (52) positioned radially inwards relative to the vane inner platform (41);
- a membrane seal (46) extending from the carrier (52) to the vane inner platform (41) to isolating the hot gas from a higher-pressure cooling air in a volume (55) below the vane inner platform (41) and downstream the membrane seal (46) that is fed by cooling air (56);
wherein the membrane seal (46) comprises:
- an inner end (61) housed in a groove (51) in the carrier (52) ;
- an outer end (62) housed in a groove (53) in the vane inner platform (41);
- a membrane (64) connecting the inner end (61) to the outer end (62);
**characterized in that**
the membrane (64) is offset to the outer end (62) towards the higher-pressure volume (55) so that the membrane seal (46) discloses an outer portion with a "P"-shaped profile.

2. Gas turbine as claimed in claim 1, wherein the membrane (46) is provided with a row of through holes (66) positioned close to the seal outer end (62) to feed cooling air into upstream side of the groove (53) in the vane inner platforms (41).

3. Gas turbine as claimed in claim 1 or 2, wherein the membrane (46) is provided with a row of through holes (65) positioned close to the inner end (61) or centrally positioned (67) on the radial membrane (64) to feed cooling air as purge air into a lower-pressure volume (54) upstream of the membrane seal (46).

4. Gas turbine as claimed in any one of the foregoing claims, wherein the outer end (62) has a circumferential pattern of slots (68).

5. Gas turbine as claimed in any one of the foregoing claims, wherein the outer end (62) comprises an upstream portion (63) with reduced radial depth to act as a sacrificial wear surface so that a continuous circumferential sealing line forms between the seal outer end (62) and the individual axially-mismatched vane grooves (53) .

6. Gas turbine as claimed in any one of the foregoing claims, wherein the upstream side of the outer end (62) and adjacent surfaces upstream side of the membrane (64) have a wear coating applied.

7. Gas turbine as claimed in any one of the foregoing claims, wherein the upstream side of the inner end (61) and adjacent surfaces upstream side of the membrane (64) have a wear coating applied.

8. Gas turbine as claimed in any one of the foregoing claims, wherein the sectional profile of the membrane seal (46) is substantially "S" shaped.

9. Gas turbine as claimed in any one of the foregoing claims, wherein inner end (61) and/or the outer end (62) is/are substantially circular shaped.

10. Gas turbine as claimed in any one of the foregoing claims, wherein it comprises an membrane seal upper part (46) and a membrane seal lower part (46) in the circumferential direction, the membrane seals (46) having sectional profiles at the ends to produce when overlapping the same sectional profile as at all other circumferential positions on the membrane seals (46).

11. Gas turbine as claimed in any one of the foregoing claims, wherein it comprises at least one combustor, the membrane seal (46) being arranged at the combustor to turbine interface.

12. A method for retrofitting gas turbines for power plant already in service; the method comprising the steps of:
a) providing a gas turbine assembly (5, 7, 21, 34) according to the preamble of claim 1 comprising a plurality of former membrane seals;
b) providing a plurality of membrane seals (46) according to the characterizing portion of claim 1;
c) replacing the former membrane seals with the membrane seals according to the characterizing portion of claim 1.

13. Method as claimed in claim 12, wherein the step a) of providing a gas turbine assembly is performed by providing a sequential gas turbine (1) comprising a high-pressure turbine (5) and a low-pressure turbine (7).

14. Method as claimed in claim 12, wherein the step a) of providing a gas turbine assembly is performed by providing a sequential gas turbine (20) comprising a plurality of can combustors (22).

15. Method as claimed in any one of the foregoing claims from 12 to 14, wherein the step c) of replacing the former membrane seals with the membrane seals (46) according to claim 1 is performed by replacing the former membrane seals arranged at the combustor to turbine interface.

## Patentansprüche

1. Gasturbine für ein Kraftwerk, welche Gasturbine (1, 20) umfasst:
- mindestens eine Turbine (5, 7, 21, 34), die mit mindestens einer Reihe von Statorschaufeln (16, 39) versehen ist, die dafür konfiguriert sind, einen Heißgasstrom (36) zu leiten; wobei jede Schaufel (16, 39) nach außen hin mit einem äußeren Gehäuse (17, 40) verbunden ist und eine innere Plattform (41) umfasst;
- einen Mantelsegmentträger (52), der relativ zu der inneren Schaufelplattform (41) radial innerhalb positioniert ist;
- eine Membrandichtung (46), die sich von dem Träger (52) zu der inneren Schaufelplattform (41) erstreckt, um das Heißgas gegen die unter höherem Druck stehende Kühlluft in einem Volumen (55) unter der inneren Schaufelplattform (41) sowie stromabwärts der Membrandichtung (46), das mit Kühlluft (56) gespeist wird, zu isolieren;
wobei die Membrandichtung (46) umfasst:
- ein in einer Nut (51) in dem Träger (52) untergebrachtes inneres Ende (61);
- ein in einer Nut (53) in der inneren Schaufelplattform (41) untergebrachtes äußeres Ende (62) ;
- eine das innere Ende (61) mit dem äußeren Ende (62) verbindende Membran (64);
**dadurch gekennzeichnet, dass**
die Membran (64) zum äußeren Ende (62) hin zu dem Volumen (55) mit höherem Druck versetzt ist, sodass die Membrandichtung (46) einen äußeren Teil mit einem "P"-förmigen Profil zeigt.

2. Gasturbine nach Anspruch 1, wobei die Membran (46) mit einer Reihe von Durchgangslöchern (66) versehen ist, die nahe am äußeren Ende der Dichtung (62) angeordnet sind, um Kühlluft in die stromaufwärts liegende Seite der Nut (53) in der inneren Schaufelplattform (41) zu speisen.

3. Gasturbine nach Anspruch 1 oder 2, wobei die Membran (46) mit einer Reihe von Durchgangslöchern (65) versehen ist, die nahe am inneren Ende (61) positioniert sind oder an der radialen Membran (64) mittig positioniert (67) sind, um Kühlluft als Spülluft in ein Volumen (54) mit niedrigerem Druck stromaufwärts der Membrandichtung (46) zu speisen.

4. Gasturbine nach einem der vorhergehenden Ansprüche, wobei das äußere Ende (62) ein Umfangsmuster aus Schlitzen (68) hat.

5. Gasturbine nach einem der vorhergehenden Ansprüche, wobei das äußere Ende (62) einen stromaufwärts liegenden Teil (63) mit einer verringerten radialen Tiefe umfasst, der als eine Opferverschleißfläche wirkt, sodass sich zwischen dem äußeren Ende (62) der Dichtung und den einzelnen axial versetzten Schaufelnuten (53) eine durchgehende Umfangsdichtlinie bildet.

6. Gasturbine nach einem der vorhergehenden Ansprüche, wobei auf die stromaufwärts liegende Seite des äußeren Endes (62) und die stromaufwärts liegende Seite angrenzender Oberflächen der Membran (64) eine Verschleißbeschichtung aufgetragen ist.

7. Gasturbine nach einem der vorhergehenden Ansprüche, wobei auf die stromaufwärts liegenden Seite des inneren Endes (61) und die stromaufwärts liegende Seite angrenzender Oberflächen der Membran (64) eine aufgetragene Verschleißbeschichtung aufgetragen ist haben.

8. Gasturbine nach einem der vorhergehenden Ansprüche, wobei das Schnittprofil der Membrandichtung (46) im Wesentlichen "S"-förmig ist.

9. Gasturbine nach einem der vorhergehenden Ansprüche, wobei das innere Ende (61) und/oder das äußere Ende (62) im Wesentlichen kreisförmig ist bzw. sind.

10. Gasturbine nach einem der vorhergehenden Ansprüche, wobei sie einen oberen Teil (46) der Membrandichtung und einen unteren Teil (46) der Membrandichtung in Umfangsrichtung umfasst, wobei die Membrandichtungen (46) Schnittprofile an den Enden haben, sodass sie bei Überlappung dasselbe Schnittprofil wie in allen anderen Umfangspositionen an den Membrandichtungen (46) bilden.

11. Gasturbine nach einem der vorhergehenden Ansprüche, wobei sie mindestens eine Brennkammer umfasst, wobei die Membrandichtung (46) an der Schnittstelle zwischen Brennkammer und Turbine angeordnet ist.

12. Verfahren zur Nachrüstung von bereits im Dienst stehenden Gasturbinen für Kraftwerke, welches Verfahren die Schritte umfasst:
a) Bereitstellen einer Gasturbinenanordnung (5, 7, 21, 34) gemäß dem Oberbegriff von Anspruch 1, die eine Vielzahl von früheren Membrandichtungen umfasst;
b) Bereitstellen einer Vielzahl von Membrandichtungen (46) gemäß dem kennzeichnenden Teil von Anspruch 1;
c) Ersetzen der früheren Membrandichtungen durch die Membrandichtungen gemäß dem kennzeichnenden Teil von Anspruch 1.

13. Verfahren nach Anspruch 12, wobei Schritt a) des Bereitstellens einer Gasturbinenanordnung durchgeführt wird, in dem eine sequenzielle Gasturbine (1) bereitgestellt wird, die eine Hochdruckturbine (5) und eine Niederdruckturbine (7) umfasst.

14. Verfahren nach Anspruch 12, wobei Schritt a) des Bereitstellens einer Gasturbinenanordnung durchgeführt wird, in dem eine sequenzielle Gasturbine (20) bereitgestellt wird, die eine Vielzahl von Rohrbrennkammern (22) umfasst.

15. Verfahren nach einem der vorhergehenden Ansprüche von 12 bis 14, wobei Schritt c) des Ersetzens der früheren Membrandichtungen durch Membrandichtungen (46) nach Anspruch 1 durchgeführt wird, in dem die an der Schnittstelle von Brennkammer zu Turbine angeordneten früheren Membrandichtungen ersetzt werden.

## Revendications

1. Turbine à gaz pour centrale électrique ; la turbine à gaz (1, 20) comprenant :
- au moins une turbine (5, 7, 21, 34) munie d'au moins une rangée d'aubes de stator (16, 39) conçues pour guider un flux de gaz chaud (36) ; chaque aube (16, 39) étant reliée vers l'extérieur à un carter extérieur (17, 40) et comprenant une plate-forme intérieure (41) ;
- un support de segment de chemise (52) positionné radialement vers l'intérieur par rapport à la plate-forme intérieure d'aubes (41) ;
- un joint à membrane (46) s'étendant du support (52) à la plate-forme intérieure d'aubes (41) pour isoler le gaz chaud d'un air de refroidissement à pression plus élevée dans un volume (55) situé sous la plate-forme intérieure d'aubes (41) et en aval du joint à membrane (46) qui est alimenté par l'air de refroidissement (56) ;
dans laquelle le joint à membrane (46) comprend :
- une extrémité intérieure (61) logée dans une rainure (51) du support (52) ;
- une extrémité extérieure (62) logée dans une rainure (53) dans la plate-forme intérieure d'aubes (41) ;
- une membrane (64) reliant l'extrémité intérieure (61) à l'extrémité extérieure (62) ;
**caractérisée en ce que**
la membrane (64) est décalée par rapport à l'extrémité extérieure (62) en direction du volume à pression plus élevée (55) de sorte que le joint à membrane (46) présente une partie extérieure avec un profil en forme de « P ».

2. Turbine à gaz selon la revendication 1, dans laquelle la membrane (46) est pourvue d'une rangée de trous traversants (66) positionnés à proximité de l'extrémité extérieure de joint (62) pour alimenter en air de refroidissement le côté amont de la rainure (53) dans les plates-formes intérieures d'aubes (41).

3. Turbine à gaz selon la revendication 1 ou 2, dans laquelle la membrane (46) est munie d'une rangée de trous traversants (65) positionnés à proximité de l'extrémité intérieure (61) ou positionnés de manière centrale (67) sur la membrane radiale (64) pour alimenter en air de refroidissement, en tant qu'air de purge, un volume à pression inférieure (54) en amont du joint à membrane (46).

4. Turbine à gaz selon l'une quelconque des revendications précédentes, dans laquelle l'extrémité extérieure (62) présente un motif circonférentiel de fentes (68).

5. Turbine à gaz selon l'une quelconque des revendications précédentes, dans laquelle l'extrémité extérieure (62) comprend une partie amont (63) ayant une profondeur radiale réduite pour agir comme une surface d'usure sacrificielle de sorte qu'une ligne d'étanchéité circonférentielle continue se forme entre l'extrémité extérieure de joint (62) et les rainures d'aube individuelles décalées axialement (53).

6. Turbine à gaz selon l'une quelconque des revendications précédentes, dans laquelle un revêtement d'usure est appliqué sur le côté amont de l'extrémité extérieure (62) et sur les surfaces adjacentes du côté amont de la membrane (64).

7. Turbine à gaz selon l'une quelconque des revendications précédentes, dans laquelle un revêtement d'usure est appliqué sur le côté amont de l'extrémité intérieure (61) et sur les surfaces adjacentes du côté amont de la membrane (64).

8. Turbine à gaz selon l'une quelconque des revendications précédentes, dans laquelle le profil en coupe du joint à membrane (46) est sensiblement en forme de « S ».

9. Turbine à gaz selon l'une quelconque des revendications précédentes, dans laquelle l'extrémité intérieure (61) et/ou l'extrémité extérieure (62) est/sont de forme sensiblement circulaire.

10. Turbine à gaz selon l'une quelconque des revendications précédentes, comprenant une partie supérieure de joint à membrane (46) et une partie inférieure de joint à membrane (46) dans la direction circonférentielle, les joints à membrane (46) ayant des profils en coupe aux extrémités à produire lorsqu'ils chevauchent le même profil en coupe qu'à toutes les autres positions circonférentielles sur les joints à membrane (46).

11. Turbine à gaz selon l'une quelconque des revendications précédentes, comprenant au moins une chambre de combustion, le joint à membrane (46) étant disposé au niveau de l'interface entre la chambre de combustion et la turbine.

12. Procédé de rééquipement de turbines à gaz pour une centrale électrique déjà en service ; le procédé comprenant les étapes suivantes :
a) la fourniture d'un ensemble turbine à gaz (5, 7, 21, 34) selon le préambule de la revendication 1 comprenant une pluralité d'anciens joints à membrane ;
b) la fourniture d'une pluralité de joints à membrane (46) selon la partie caractérisante de la revendication 1 ;
c) le remplacement des anciens joints à membrane par les joints à membrane selon la partie caractérisante de la revendication 1.

13. Procédé selon la revendication 12, dans lequel l'étape a) de fourniture d'un ensemble turbine à gaz est réalisée en fournissant une turbine à gaz séquentielle (1) comprenant une turbine haute pression (5) et une turbine basse pression (7).

14. Procédé selon la revendication 12, dans lequel l'étape a) de fourniture d'un ensemble turbine à gaz est réalisée en fournissant une turbine à gaz séquentielle (20) comprenant une pluralité de chambres de combustion tubulaires (22).

15. Procédé selon l'une quelconque des revendications précédentes 12 à 14, dans lequel l'étape c) de remplacement des anciens joints à membrane par les joints à membrane (46) selon la revendication 1 est réalisée en remplaçant les anciens joints à membrane disposés au niveau de l'interface entre la chambre de combustion et la turbine.
